# EUROPEAN PATENT APPLICATION

(11) **EP 3 023 888 A1**
(43) Date of publication of application: **25.05.2016**
(21) Application number: 14306848.4
(22) Date of filing: 20.11.2014
(51) Int. Cl.: G06F 17/30, G06Q 50/00

(54) **Method and apparatus for creating arrangements of spaces for virtual reality**

(71) Applicant: Thomson Licensing, 92130 Issy-les-Moulineaux (FR)
(72) Inventor: Balest, Adam, West Hollywood, CA California 90046 (US)
(74) Representative: Huchet, Anne

(57) **Abstract**

Recommendations for media assets are presented in the form of spaces (400). The spaces are selected in accordance with recommendations that are generated in accordance with a user profile. The spaces are then configured into an arrangement which a user can navigate through using virtual reality technology.

## Description

### TECHNICAL FIELD

The present disclosure generally relates to a method and apparatus for providing access to stored media assets.

### BACKGROUND OF THE DISCLOSURE

When receiving recommendations of different media services, a user typically receives a textual description of a number of movies, television shows, and the like that are arranged in a suggested order. In the following the term media asset will be used as a general reference for different kinds of media services. Although such a listing can be helpful for a user to select a media asset to consume, the user may want to navigate the media assets in a way that resembles real life, e.g. DVDs and CDs are located in different racks, the TV set and the CD player are in different locations etc. With the emergence of virtual reality technology, the selection and presentation of recommendations can be improved on.

### SUMMARY OF THE INVENTION

A method and apparatus is described that provides media recommendations in the form of different spaces in three dimensions. The spaces are selected in accordance with recommendations that are generated in accordance with a user profile. The spaces are then configured into an arrangement which a user can navigate through using virtual reality technology.

According to a first aspect, the present disclosure suggests a method for providing access to stored media assets. The method comprises:
- receiving a selection of a plurality of media assets for use;
- creating at least one graphic object providing a space for each media asset of the plurality of selected media assets;
- generating an arrangement of at least one graphic object composed of the space(s); and
displaying the arrangement in a virtual reality environment. The method can impart an intuitively recognizable structure to the media asset helping the user to easily find the media asset he or she is looking for.

According to an embodiment the method further comprises generating an arrangement of several spaces in a virtual reality environment. Several spaces are helpful to organize media assets in clearly arranged manner. In this case the method can further comprise generating a sub-arrangement of several spaces within a space in a virtual reality environment.

In an embodiment the method comprises generating the said arrangement in accordance with user preferences.

In another embodiment the method comprises displaying the arrangement on a display device.

The method can further comprise selecting the plurality of media assets for use according to user preferences.

In a preferred embodiment the method comprises selecting at least one space based on a common attribute shared between spaces comprising said at least one space. In this case the attribute can be at least one attribute selected from the group comprising: actor, director, title of a media asset, copyright year of a media asset, media format, genre, author, performer, and location media assets was created.

The recommendation for a user is determined from a user profile containing at least one demographic information selected from the group comprising: prior media assets purchases of said user, prior media asset rentals of said user, media assets that said user has searched for, age of said user, sex of said user, residence of said user, occupation of said user, income of said user, and marital status of said user.

It has been found useful if the method further comprises displaying graphic elements associated with media assets in the space(s).

According to another embodiment the method further comprises displaying graphic elements associated with media assets in the same space if the corresponding media assets share at least one common attribute.

According to a second aspect, the present disclosure suggests an apparatus that presents a virtual reality environment comprising:
- a processor, and
- a memory storing instructions that, when executed, perform a method according to the first aspect of the present disclosure.

### BRIEF DESCRIPTION OF THE DRAWINGS

These, and other aspects, features and advantages of the present disclosure will be described or become apparent from the following detailed description of the preferred embodiments, which is to be read in connection with the accompanying drawings.

In the drawings, wherein like reference numerals denote similar elements throughout the views:
FIG. 1 is a block diagram of an exemplary system for generating an arrangement of spaces for virtual reality environment in accordance with the present disclosure;
FIG. 2 is a block diagram of an exemplary media device in accordance with the present disclosure;
FIG. 3 is a block diagram of a server in accordance with an embodiment of the present disclosure;
FIGS. 4A and 4B are exemplary views of a space in accordance with an embodiment of the present disclosure;
FIG. 5 is an exemplary view of different sides of an informational space in accordance with an embodiment of the present disclosure;
FIGS. 6A-6D are exemplary views of an arrangement of spaces in accordance with an embodiment of the present disclosure;
FIG. 7 is a flowchart of an exemplary method for generating an arrangement of spaces for a virtual reality environment in accordance with the present disclosure.

### DETAILED DESCRIPTION

The present disclosure provides several different embodiments of arrangements of different spaces that are presented in a virtual reality space. Virtual reality can be a three dimensional environment that a user typically wears a device, such as an OCULUS RIFT™, in order to view. Many times, a user has the ability to manipulate a virtual reality environment using a user interface such as a joystick, mouse, game controller, sensor glove, and the like. A virtual reality environment can also be manipulated by using a device such as a MICROSOFT KINECT™ which can observe the movements of a user which causes a virtual reality renderer to operate in an appropriate manner.

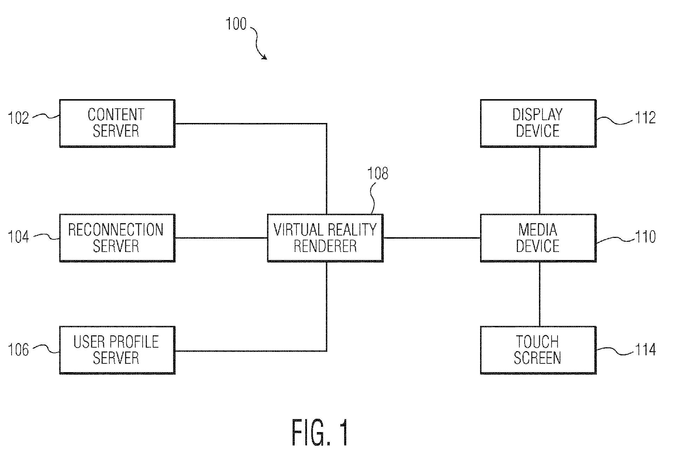

Turning to FIG. 1, a system diagram of a virtual reality rendering environment 100 that can be used with a media device. Content server 102 contains data that is used to create virtual reality spaces that are manipulated into different arrangements in accordance with different recommendations for a user. Specifically, each space is associated with a media asset such as a movie, television show, music album, music song, video game and the like. Each space operates as a "room" where the contents in the space relate to a media asset, a person, a genre, and the like. Spaces and the content of such spaces will be described in more detail below.

In one exemplary embodiment of the disclosed principles, content server 102 contains versions of virtual reality spaces that are pre-rendered. The pre-rendered spaces can be created by graphic designers using a program such as MIDDLEVR™ that is used with the UNITY™ graphics platform to create virtual reality environments. In another exemplary embodiment of the disclosed principles, content server 102 can create virtual reality spaces on the fly using a graphic engine platform such as UNITY, MAXPLAY™, and the like with metadata and graphics information are used to construct virtual reality spaces. Other approaches can be used to create virtual reality spaces in accordance with the described principles.

Recommendation server 104 is a server that can be implemented with a database which provides recommendations of different media assets based on a user profile. Specifically, such information can come from user profile server 106. Recommendation server 104 can be implemented using a software analytics application that determines trends in how users consume, rent, view, and otherwise interface with media assets. Such trends can be determined, in accordance with the exemplary principles, on an aggregate user level and by individual users. Recommendations of media assets from recommendation server 104 are utilized by virtual reality renderer 108 in an exemplary embodiment of the presented principles. Recommendations can also be made by recommendation server 104 to suggest particular people, actors, directors, genres, and the like, in accordance with the exemplary principles.

User profile server 106 is where the usage habits for a user are monitored and information about such usage habits is stored. It is possible to use such user habit information to develop a profile for a user which is then used for recommending advertisements and programming using recommendation server 104. Some of the demographic information that user profile server 106 is implemented to track includes prior media assets purchases of a user, prior media asset rentals of a user, media assets that a user has searched for, age of a user, sex of a user, residence of a user, occupation of a user, income of a user, marital status of a user, and the like.

Virtual reality renderer 108, which is coupled to content server 102, recommendation server 104, and user profile server 106, operates with each of these servers to select relevant information that is transmitted to media device 110. The coupling of these devices can be through a network, an internet connection, a communication network, twisted pair copper, fiber optic line, and the like. In addition, content server 102, recommendation server 104, user profile server 106, and virtual reality renderer 108 can be integrated together or remain separate in accordance with the exemplary embodiments. Content server 102, recommendation server 104, user profile server 106, and virtual render 108 can be implemented as a server, as a computer with storage, software, in a cloud computing environment such as virtual machines, as a combination of software and hardware, and the like.

Specifically, virtual reality renderer 108, in response to a query from media device 110, can generate an arrangement of spaces by first querying user profile server 106 for user profile information. The profile information is then forwarded to recommendation server 104 by virtual reality render 108 in order to receive recommendations that comport to the user profile. The received recommendations are then are arranged into a particular order by virtual reality renderer 108 whereby the appropriate spaces are requested from content server 102. The order and configuration of the described arrangements will be described below. When the requested spaces are received, virtual reality render 108 will generate a graphic arrangement of spaces for a virtual reality environment in accordance with the defined order of the received recommendations. The graphic information composing the spaces and the arrangement of such spaces is transmitted by virtual reality render 108 to media device 110 in accordance with an exemplary embodiment of the present principles.

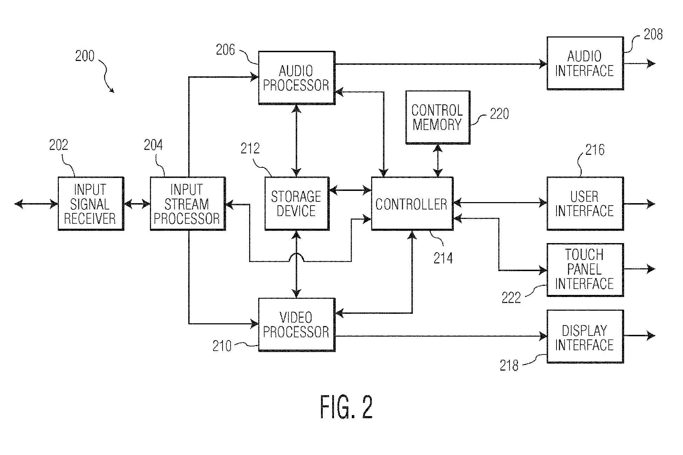

The media device 110, as a consumption device, can receive different types of content and data from content server 102, recommendation server 104, user profile server 106, virtual reality renderer 108, and the like. The media device 110 processes the content, and generates a virtual reality environment from the received content and information. The media device 110 can also include a storage device, such as a hard drive or optical disk drive, for recording and playing back audio and video content. Further details of the operation of the media device 110 and features associated with playing back stored content will be described below in relation to FIG. 2. The processed content is provided to a display 112 which can be part of media device 110. The display should ideally be capable of supporting a virtual reality environment in 2-D, 3-D, or a combination thereof. In an embodiment of media device 110, the display device 112 can be integrated head mounted device that a user explores a virtual reality environment by using a pair of video monitors that are used to create a 3-D image. In an embodiment, media device 110 is separated from display device 112. The display device 112 can be a conventional 2-D type display or can alternatively be an advanced 3-D display.

The media device 110 can also be interfaced to a second screen such as a touch screen control device 114. The touch screen control device 114 can be adapted to provide user control for the media device 108 and/or the display device 112. The touch screen device 114 can also be capable of displaying video content. The video content can be graphics entries, such as user interface entries, or can be a portion of the video content that is delivered to the display device 112 The touch screen control device 114 can interface to media device 110 using any well-known signal transmission system, such as infra-red (IR) or radio frequency (RF) communications and can include standard protocols such as infra-red data association (IRDA) standard, Wi-Fi, Bluetooth and the like, or any other proprietary protocols.

Optionally, media device 110 and touch screen control device 114 can be integrated into the same device. Examples of these media devices with a touch screen include computers, laptops, cell phones, personal media player, MP3 players, personal desk assistants, tablet devices, digital video recorders, and the like. For purposes of the this specification, the term media device 110 can encompass all of these type of devices with set top boxes, digital video recorders, gateway devices, and the like.

Turning now to FIG. 2, a block diagram of an embodiment of a media device 200 is shown. Media device 200 can operate similar to the media device described in FIG. 1 and can be included as part of a gateway device, modem, set-top box, tablet, or other similar communications device. Media device 200 shown can also be incorporated into other systems including an audio device or a display device. In either case, several components necessary for complete operation of the system are not shown in the interest of conciseness, as they are well known to those skilled in the art.

Media device 200 shown in FIG. 2, content is received by an input signal receiver 202. The input signal receiver 202 can be one of several known receiver circuits used for receiving, demodulation, and decoding signals provided over one of the several possible networks including over the air, cable, satellite, Ethernet, fiber and phone line networks. The desired input signal can be selected and retrieved by the input signal receiver 202 based on user input provided through a control interface or touch panel interface 222. Touch panel interface 222 can include an interface for a touch screen device. Touch panel interface 222 can also be adapted to interface to a cellular phone, a tablet, a mouse, a high end remote or the like.

The decoded output signal is provided to an input stream processor 204. The input stream processor 204 performs the final signal selection and processing, and includes separation of video content from audio content for the content stream. The audio content is provided to an audio processor 206 for conversion from the received format, such as compressed digital signal, to an analog waveform signal. The analog waveform signal is provided to an audio interface 208 and further to the display device or audio amplifier. Alternatively, the audio interface 208 can provide a digital signal to an audio output device or display device using a High-Definition Multimedia Interface (HDMI) cable or alternate audio interface such as via a Sony/Philips Digital Interconnect Format (SPDIF). The audio interface can also include amplifiers for driving one more sets of speakers. The audio processor 206 also performs any necessary conversion for the storage of the audio signals.

The video output from the input stream processor 204 is provided to a video processor 210. The video signal can be one of several formats. The video processor 210 provides, as necessary a conversion of the video content, based on the input signal format. The video processor 210 also performs any necessary conversion for the storage of the video signals. Video processor 210 can be configured to generate a virtual reality environment from content and information received from virtual reality renderer 108. Video processor 210 can be implemented as a graphics processor unit which has specialized graphics hardware specifically for 3D renderings. The rendered virtual reality environment can be presented on display interface 218 in accordance with an exemplary embodiment.

A storage device 212 stores audio and video content received at the input. The storage device 212 allows later retrieval and playback of the content under the control of a controller 214 received from a user interface 216 and/or touch panel interface 222. The storage device 212 can be a hard disk drive, one or more large capacity integrated electronic memories, such as static RAM (SRAM), or dynamic RAM (DRAM), or can be an interchangeable optical disk storage system such as a compact disk (CD) drive or digital video disk (DVD) drive.

The converted video signal, from the video processor 210, either originating from the input or from the storage device 212, is provided to the display interface 218. The display interface 218 further provides the display signal to a display device of the type described above. The display interface 218 can be an analog signal interface such as red-green-blue (RGB) or can be a digital interface such as HDMI.

The controller 214 is interconnected via a bus to several of the components of the device 200, including the input stream processor 202, audio processor 206, video processor 210, storage device 212, and a user interface 216. The controller 214 manages the conversion process for converting the input stream signal into a signal for storage on the storage device or for display. The controller 214 also manages the retrieval and playback of stored content.

The controller 214 is further coupled to control memory 220 (e.g., volatile or non-volatile memory, including RAM, SRAM, DRAM, ROM, programmable ROM (PROM), flash memory, electronically programmable ROM (EPROM), electronically erasable programmable ROM (EEPROM), etc.) for storing information and instruction code for controller 214. Control memory 220 can store instructions for controller 214. Control memory can also store a database of elements, such as graphic elements containing content, various graphic elements used for generating a displayed user interface for display interface 218, and the like. Alternatively, the memory can store the graphic elements in identified or grouped memory locations and use an access or location table to identify the memory locations for the various portions of information related to the graphic elements. In addition, various graphic elements can be generated in response to computer instructions interpreted by controller 214 for output to display interface 218. Additional details related to the storage of the graphic elements will be described below. Further, the implementation of the control memory 220 can include several possible embodiments, such as a single memory device or, alternatively, more than one memory circuit communicatively connected or coupled together to form a shared or common memory. Still further, the memory can be included with other circuitry, such as portions of bus communications circuitry, in a larger circuit.

Optionally, controller 214 can be adapted to extract metadata from audio and video media by using audio processor 206 and video processor 210, respectively. That is, metadata that is contained in video signal in the vertical blanking interval, auxiliary data fields associated with video, or in other areas in the video signal can be harvested by using the video processor 210 with controller 214 as to generate metadata that can be used for functions such as generating an electronic program guide, have descriptive information about received video, supporting an auxiliary information service, and the like. Similarly, the audio processor 206 working with controller 214 can be adapted to recognize audio watermarks that can be in an audio signal. Such audio watermarks can then be used to perform some action such as the recognition of the audio signal, security which identifies the source of an audio signal, or perform some other service. Furthermore, metadata to support the actions listed above can come from a network source which are processed by controller 214.

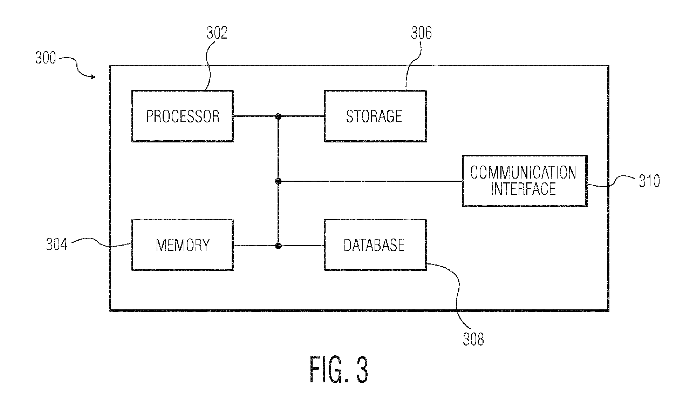

FIG. 3 presents a block diagram of an embodiment of a server 300. Processor 302 is interconnected via a bus to several of the components of the device 300, including the memory 304, storage 306, database 308, and communication interface 310. The processor 302 manages converting received signals into a signal for storage on the storage device or for display. Processor 302 also manages the retrieval and playback of stored content from memory 304 and storage 306.

Processor 302 is further coupled to memory 304 (e.g., volatile or non-volatile memory, including RAM, SRAM, DRAM, ROM, programmable ROM (PROM), flash memory, electronically programmable ROM (EPROM), electronically erasable programmable ROM (EEPROM), etc.) for storing information and instruction code for processor 302. Memory 304 can store instructions for processor 302. Memory can also store a database of elements, such as graphic elements containing content, various graphic elements used for generating a virtual reality environment for display interface 218, and the like. Alternatively, memory 304 can store the graphic elements in identified or grouped memory locations and use an access or location table to identify the memory locations for the various portions of information related to the graphic elements. In addition, various graphic elements can be generated in response to computer instructions interpreted by processor 302 for output. Further, the implementation of the memory 304 can include several possible embodiments, such as a single memory device or, alternatively, more than one memory circuit communicatively connected or coupled together to form a shared or common memory. Still further, memory 304 can be included with other circuitry, such as portions of bus communications circuitry, in a larger circuit.

Storage 306 can store content, metadata, computer instructions, renderings of spaces, graphics information, information for rendering a virtual reality environment, and the like. Storage 306 allows later retrieval and playback of the content under the control of a processor. Storage 306 can be a hard disk drive, one or more large capacity integrated electronic memories, such as static RAM (SRAM), or dynamic RAM (DRAM), or can be an interchangeable optical disk storage system such as a compact disk (CD) drive or digital video disk (DVD) drive, and the like.

Database 308 can be implemented as software, hardware, or a combination of both. In an exemplary embodiment, database 308 serves as a relational database where different entries of information such as recommendations, graphics information comporting to spaces, graphic information for rendering a virtual reality space, and the like can be accessed by processor 302. In an additional embodiment, database 308 can be implemented as a look up table. Database 308, in some exemplary embodiments, is implemented within memory 304, storage 306, or in a combination of both memory 304 and storage 306.

Communication interface 310 is controlled by processor 302 as to transfer information from server 300 to and from devices on a network as in system diagram 100. The rate in which information is transmitted to other device in a network from communication interface can depend on the physical layout of a network, bandwidth of a network, the speed of the read/write cycles of memory 304 and storage 306, the access times of database 308, speed of processor 302, and the like.

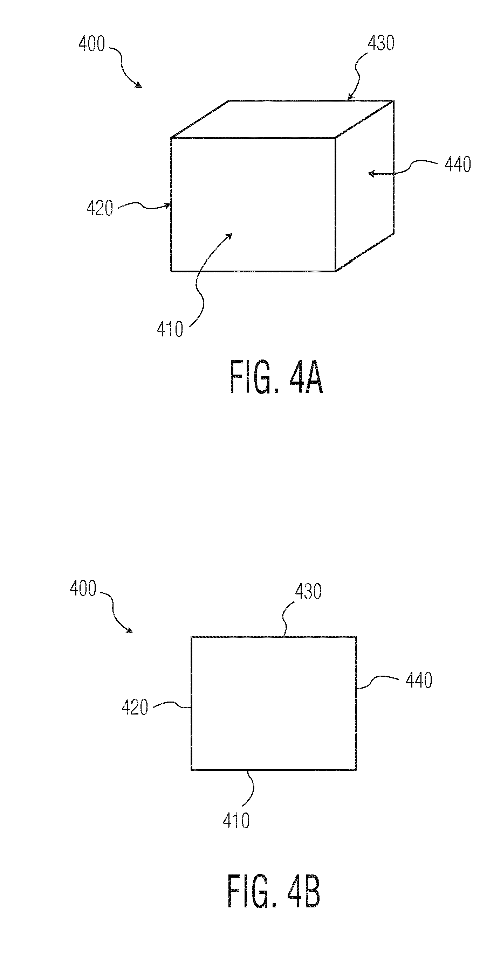

FIG 4A is an isometric representation of an exemplary space 400 in accordance with the present principles. The space 400 represents a graphical object. Space 400 serves as a representation of an area to be rendered in three dimensions that comports to a media asset, person, genre, and the like. That is, space 400 can serve as a "room" that contains information that describes a media asset, person, genre, and the like, where the walls of the room are populated with such information. In a specific embodiment, graphic elements are shown on the walls of the space 400. Space 400 because it is meant to be rendered in a virtual reality space can contain an entry and an exit point to leave the space. In an embodiment, side 420 serves as an entry/exit point and side 440 operates as a second entry/exit point for space 400. Information about a respective subject for space 400 can be rendered on sides 410 and 430, respectively.

FIG. 4B is a top view representation of an exemplary space 400 in accordance with the present principles. Sides 410 and 430 are populated with information about a subject of interest while sides 420 and 440 operate as entry/exit points for space 400 when rendered in a virtual reality environment. In exemplary embodiments, the number of sides of a space 400 can have a number of different sides which can be represented as polygons such as triangle, quadrangle, pentagon, heptagon, octagon, a shape of three or more sides, and the like. In addition, a space 400 can be generated with a single or multiple entry/exit points. Likewise, a space can be configured with a single or multiple informational sides.

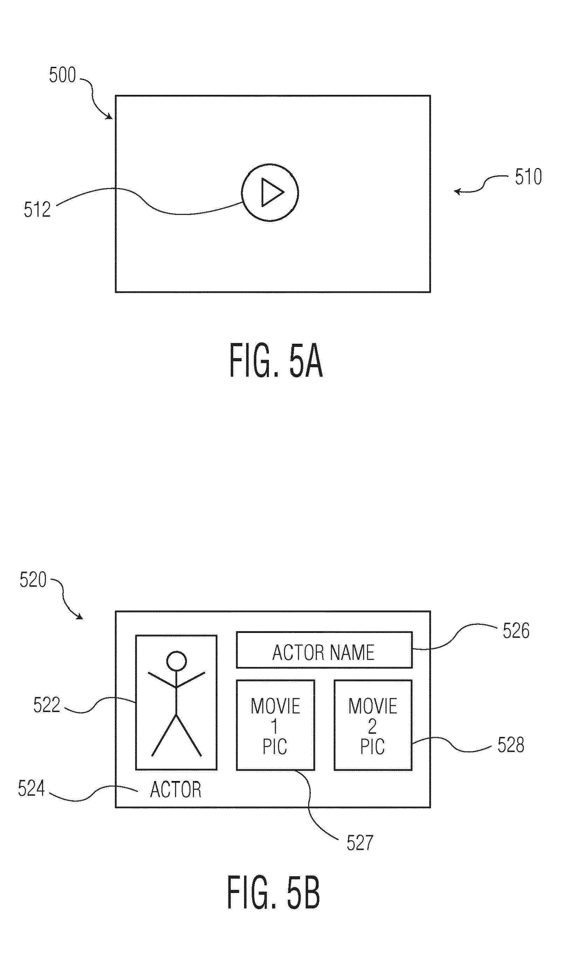

FIG. 5 presents different views of informational sides 500 that can be used for a space in accordance with the presented principles. In this specific example, the rendered sides pertain to a media asset. Side 510 presents an information panel that would contain a video of a media asset, for example, where the activation of a button 512 would present the playback of a video. View 520 represents an information panel that presents a picture 522 of an actor that would be in a media asset corresponding to a space. Information 524 identifies the person as an actor as compared to being a director, writer, production assistant, who could be involved with the creation of a media asset. Name 526 is the name of the actor starring in a media asset, with pictures 527 and 528 being representative scenes of a media asset. The image, graphic and alphanumeric information provided in informational sides are referred to as "graphic element" in general. Other sides can show other types of information in accordance with the described principles. Note, sides 510 and 520 could correspond to sides 410 and 430 for FIGS. 4A and 4B, respectively.

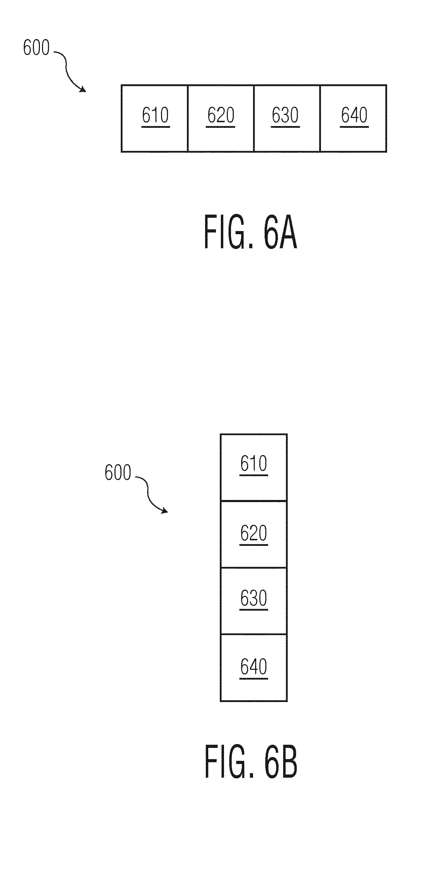

FIG. 6A presents a representation of arrangement 600 of spaces for a virtual reality environment in accordance with an exemplary embodiment. In the present embodiment, a front view of spaces 610, 620, 630, and 640 are arranged in a specific order for a user. Referring to FIG. 1, based on the recommendations from recommendation server 104, four different media asset titles are suggested for a user based on profile information from user profile server 106. The corresponding spaces for the media assets are obtained from content server 102 and are rendered for media device 110. In the present example, space 610 would represent the media asset with the highest ranking for a user, space 620 would represent the second highest ranked media asset, space 630 would represent the third highest ranked media asset, and space 640 is the lowest ranked media asset.

FIG. 6B presents a representation of arrangement 600 of spaces for a virtual reality environment in accordance with an exemplary embodiment. In this embodiment of a front view of an arrangement 600, spaces 610, 620, 630, and 640 are stacked on top of each other. Space 610 could comport to the "most" recommended media asset for a user while space 640 represents a space that is least recommended to a user.

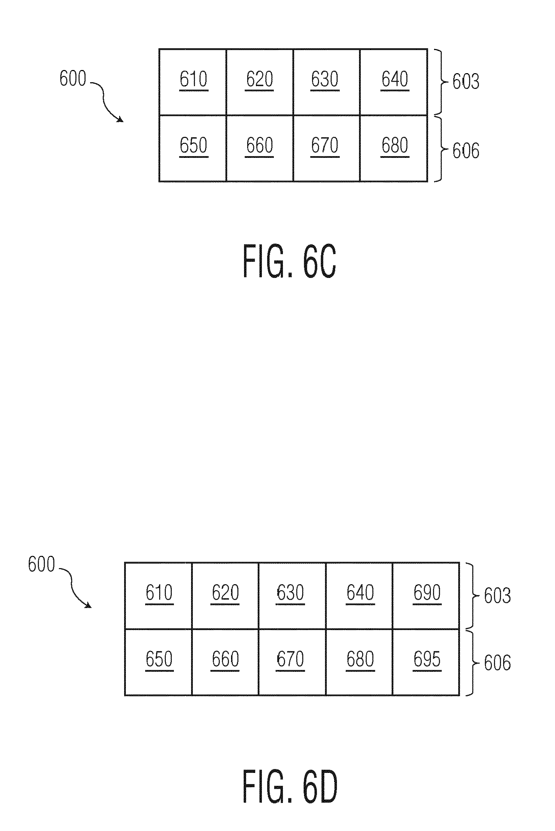

FIG. 6C presents a representation of arrangement 600 of spaces for a virtual reality environment in accordance with an exemplary embodiment. In this present embodiment, there are two sub-arrangements that are used to create an arrangement 600. Specifically, spaces 610, 620, 630, and 640 comport to different media assets that share a common attribute such as a first genre. Such spaces form a sub-arrangement 603. This is compared to spaces 650, 660, 670, and 680 comport to other media assets that share a second common attribute such as a second genre. Such spaces form a sub-arrangement 606. That is, sub-arrangement 603 and 606 are used to form arrangement 600.

FIG. 6D presents a representation of arrangement 600 of spaces for a virtual reality environment in accordance with an exemplary embodiment of the presented principles. In this present embodiment, there are two sub-arrangements that are used to create an arrangement 600. Specifically, spaces 610, 620, 630, and 640 comport to different media assets that share a common attribute such as a first genre. Such spaces form a sub-arrangement 603. This is compared to spaces 650, 660, 670, and 680 comport to other media assets that share a second common attribute such as a second genre. Such spaces form a sub-arrangement 606. That is, sub-arrangement 603 and 606 are used to form arrangement 600. Note, that in this arrangement that additional space 690 is added to sub-arrangement 603 while space 695 is added to sub-arrangement 606. In accordance with the described principles, an arrangement should contain more than two spaces, where the number of spaces and the layout of arrangements and sub-arrangements do not have an upper limit.

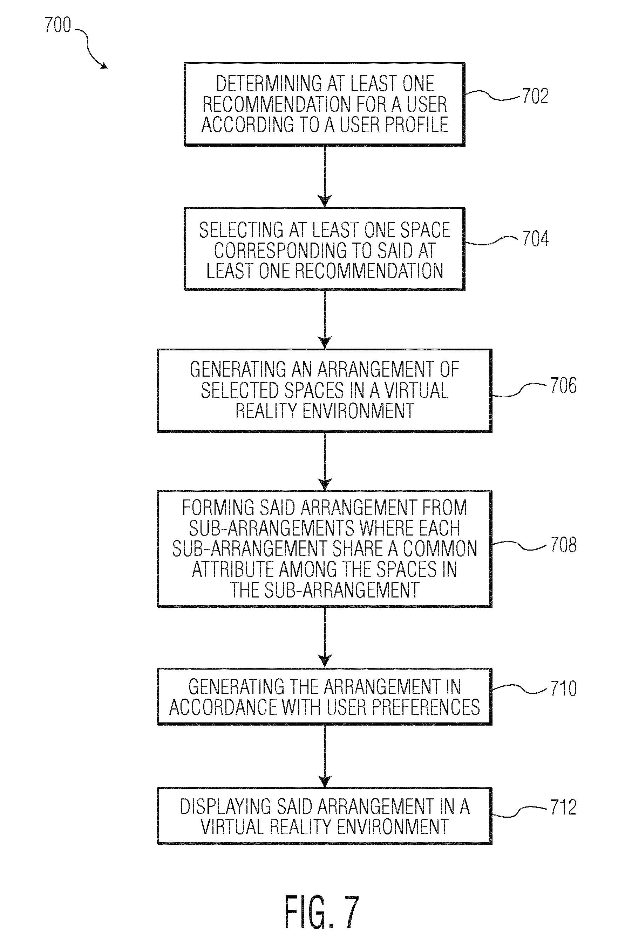

FIG. 7 illustrates an exemplary embodiment of a flowchart 700 generating an arrangement of spaces for a virtual reality environment. In step 702, a determination is made to suggest a recommendation to a user based on the profile of such a user. Referring to FIG. 1, the demographic and usage information of a user can be obtained from user profile server 106. Examples of such information include prior media assets purchases of a user, prior media asset rentals of a user, media assets that a user has searched for, age of a user, sex of a user, residence of said user, occupation of a user, income of a user, and marital status of a user. Recommendation server 104 can be referenced to obtain media asset recommendations for a user from such profile information.

In step 704, recommendation information is used to select spaces from content server 102. That is, different recommendations for media assets are selected from content server 102 where each media asset has a corresponding space that can be used for generating a virtual reality environment. Virtual reality renderer 108 can make such a determination of what spaces to select in accordance with an exemplary embodiment.

In step 706, an arrangement of selected spaces is formed by virtual reality renderer 108 for a virtual reality environment. The arrangement of spaces can be horizontal, vertical, any three dimensional shape, incorporate a number of spaces, incorporate a number of sides for each space, and the like. A number of sub-arrangements can also be formed in step 708 by virtual reality render 108 where the spaces that are used to form the sub-arrangement should share a common attribute. Such attributes can be actor, director, title of a media asset, copyright year of a media asset, media format, genre, author, performer, and location media assets were created. For example, a first sub-arrangement can have spaces that share the same genre such as horror, while a second sub-arrangement can have spaces that share the same genre such as adventure. The number of sub-arrangements that are used to form an arrangement are not limited in accordance with the described principles.

In step 710, the arrangement is generated by virtual reality renderer 108 in accordance with user preferences. These preferences can specify a limit to the number of spaces used for an arrangement, the structure of an arrangement, how many sides are to be contained within a space, the information displayed in a space, and the like. The method concludes with step 712 where virtual reality renderer 108 can be used to display the arrangement of spaces. In other embodiments, the arrangement of spaces are displayed by media device 110 using a display on such a device, or the arrangement of spaces is display on display device 112 using information from media device 110.

It should be understood that the elements shown in the FIGS. can be implemented in various forms of hardware, software or combinations thereof. These elements can be implemented in a combination of hardware and software on one or more appropriately programmed general-purpose devices, which can include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for informational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes that can be substantially represented in computer readable media and so executed by a computer or processor, whether or not such computer or processor is explicitly shown. The computer readable media and code written on can be implemented in a transitory state (signal) and a non-transitory state (e.g., on a tangible medium such as CD-ROM, DVD, Blu-Ray, Hard Drive, flash card, or other type of tangible storage medium).

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read only memory ("ROM") for storing software, random access memory ("RAM"), and nonvolatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

Although embodiments which incorporate the teachings of the present disclosure have been shown and described in detail herein, those skilled in the art can readily devise many other varied embodiments that still incorporate these teachings. It is noted that modifications and variations can be made by persons skilled in the art in light of the above teachings.

## Claims

1. A method for providing access to stored media assets comprising:
- receiving a selection of a plurality of media assets for use;
- creating at least one graphic object providing a space for each media asset of the plurality of selected media assets;
- generating an arrangement of at least one graphic object composed of the space(s); and
displaying the arrangement in a virtual reality environment.

2. Method according to claim 1 comprising:
- generating an arrangement (600) of several spaces (610, 620, 630, 640) in a virtual reality environment.

3. Method according to claim 2 comprising:
- generating a sub-arrangement of several spaces within a space (610, 620, 630, 640) in a virtual reality environment.

4. The method according to claim 2 comprising:
- generating the said arrangement (600) in accordance with user preferences.

5. Method according to claim 1 comprising:
- displaying the arrangement on a display device.

6. Method according to claim 1 further comprising:
- selecting the plurality of media assets for use according to user preferences.

7. The method according to claim 1 further comprising
- selecting at least one space based on a common attribute shared between spaces comprising said at least one space.

8. The method according to claim 7, wherein the attribute is at least one attribute selected from the group comprising: actor (524), director, title of a media asset, copyright year of a media asset, media format, genre, author, performer, and location media assets was created.

9. The method according to claim 1, wherein said recommendation for a user is determined from a user profile containing at least one demographic information selected from the group comprising: prior media assets purchases of said user, prior media asset rentals of said user, media assets that said user has searched for, age of said user, sex of said user, residence of said user, occupation of said user, income of said user, and marital status of said user.

10. Method according to claim 1 further comprising:
- displaying graphic elements (522, 524, 526, 527, 528) associated with media assets in the space(s).

11. Method according to claim 1 further comprising:
- displaying graphic elements (522, 524, 526, 527, and 528) associated with media assets in the same space if the corresponding media assets share at least one common attribute.

12. An apparatus that presents a virtual reality environment comprising:
- a processor, and
- a memory storing instructions that, when executed, perform a method according to one or several of claims 1 to 11.
